# EUROPÄISCHE PATENTANMELDUNG

(11) **EP 3 006 957 A1**
(43) Veröffentlichungstag der Anmeldung: **13.04.2016**
(21) Anmeldenummer: 15183717.6
(22) Anmeldetag: 03.09.2015
(51) Int. Cl.: G01S 17/93, G01S 17/42, G01S 7/481

(54) **OPTOELEKTRONISCHE DETEKTIONSEINRICHTUNG, VERFAHREN ZUM BETRIEB EINER SOLCHEN DETEKTIONSEINRICHTUNG UND KRAFTFAHRZEUG MIT EINER SOLCHEN DETEKTIONSEINRICHTUNG**

(30) Priorität: 10.10.2014 DE 102014114723
(71) Anmelder: Valeo Schalter und Sensoren GmbH, 74321 Bietigheim-Bissingen (DE)
(72) Erfinder: Mueller, Felix, 74321 Bietigheim-Bissingen (DE)

(57) **Zusammenfassung**

Die Erfindung betrifft eine optoelektronische Detektionseinrichtung 1 mit mindestens einem optischen Sender 7, 8 und einem optischen Empfänger 10 zum Empfangen von reflektierten Strahlen, welcher einer Auswertungseinrichtung 13 ein in Abhängigkeit der reflektierten Strahlen gebildetes Empfangssignal 12 bereitstellt. Die Erfindung betrifft außerdem ein Verfahren zum Betrieb einer solchen Detektionseinrichtung 1 sowie ein Kraftfahrzeug mit einer solchen Detektionseinrichtung 1.

Um die Qualität der Detektionsergebnisse in einem weiten Umgebungsbereich des Kraftfahrzeugs zu verbessern ist erfindungsgemäß vorgesehen, dass die Detektionseinrichtung 1 mehrere optische Sender aufweist, nämlich einen Laser-Sender 7, welcher zur Abgabe von Laserstrahlen innerhalb eines Abtastwinkelbereichs ausgebildet ist, und einen LED-Sender 8, welcher wenigstens eine Leuchtdiode umfasst.

## Beschreibung

Die Erfindung betrifft eine optoelektronische Detektionseinrichtung gemäß dem Oberbegriff des Anspruchs 1. Die Erfindung betrifft außerdem ein Verfahren zum Betrieb einer solchen optoelektronischen Detektionseinrichtung gemäß Anspruch 4 sowie gemäß Anspruch 8 ein Kraftfahrzeug mit einer solchen Detektionseinrichtung.

Im Automobilbereich werden zunehmend unterschiedliche Fahrerassistenzsysteme eingesetzt, das heißt elektronische Zusatzeinrichtungen zur Unterstützung des Fahrers in bestimmten Fahrsituationen. Zur Erkennung von Objekten in der Umgebung des Kraftfahrzeugs sowie zur Entfernungs- oder Geschwindigkeitsmessung sind optoelektronische Detektionseinrichtungen bekannt, welche nach dem Prinzip der Lichtlaufzeitzeitmessung (englisch: "time of flight", TOF) arbeiten. Die Detektionseinrichtung umfasst hierzu mindestens einen optischen Sender zum Aussenden elektromagnetischer Sendepulse in die Umgebung. Ein optischer Empfänger der Detektionseinrichtung weist mindestens einen Fotodetektor zum Empfangen von reflektierten Strahlen und zum Bereitstellen eines elektrischen Empfangssignals abhängig von den reflektierten Strahlen auf. Erkennt eine Auswertungseinrichtung anhand des des optoelektronischen Empfängers Echos, beziehungsweise Pulse, in den empfangenen Strahlen, so sind diese grundsätzlich auf Reflektionen der ausgesendeten Sendepulse an Zielobjekten in der Umgebung zurückzuführen. Die Laufzeit zwischen dem Aussenden und dem Empfangen des Echos ist proportional zur Distanz zum Objekt.

Aus der Laufzeitmessung wird beispielsweise die Entfernung zum betreffenden Objekt ermittelt. Die von der Detektionseinrichtung ermittelten Informationen über Objekte im Umfeld des Kraftfahrzeugs werden einem Steuergerät für das Fahrerassistenzsystem bereitgestellt.

Unter der Bezeichnung "LIDAR" ("Light detection and ranging") wird eine Laufzeitmessung mit gepulsten Laser-Strahlen verstanden. Dabei werden die Sendepulse innerhalb eines Abtastwinkelbereichs in die Umgebung des Kraftfahrzeugs gesendet und so das Umfeld schrittweise gescannt. Ein derartiger Laserscanner ist beispielsweise aus DE 10 2010 047 984 A1 bekannt. Der bekannte Laserscanner weist einen Laser als optischen Sender sowie eine drehende Spiegeleinheit auf, welche mit einem, dem Sender zugeordneten, Sendespiegel die ausgesendeten Strahlen auf die zu vermessende Szene umlenkt. Der bekannte Laserscanner weist außerdem einen Empfangsspiegel auf, welcher die von Zielobjekten im Abtastwinkelbereich reflektierten Strahlen auf den Empfänger umlenkt. Ein dem Empfänger zugeordneter Empfangsspiegel lenkt die von Zielobjekten reflektierten Strahlen auf den Empfänger um. Der Sendespiegel und der Empfangsspiegel sind um eine gemeinsame Rotationsachse drehbar, welche von einer Antriebseinheit angetrieben wird. Die ausgesendeten Laserpulse werden über den schwenkbaren Spiegel so umgelenkt, dass eine Abtastung des gesamten Umfelds innerhalb des Abtastwinkelbereichs stattfindet.

Die Lichtlaufzeitmessung mittels Laserpulsen wird häufig mittels Laserdioden realisiert, welche vergleichsweise hohe Kosten verursachen. Darüber hinaus hat sich herausgestellt, dass die Lichtleistung bei hohen Temperaturen stark abnimmt. Ferner weisen Laserscanner geringere Pulsfrequenzen auf im Vergleich zu anderen Lichtquellen.

Es ist außerdem bekannt, eine Lichtlaufzeitmessung in einer optoelektronischen Detektionseinrichtung mittels Leuchtdioden zu realisieren. Bei der Entwicklung von optoelektronischen Detektionseinrichtungen mit Leuchtdioden als optischen Sender wird üblicherweise ein Sichtfeld (englisch "field of view" = FOV) festgelegt. Das Sichtfeld (FOV) gibt vor, in welchem Bereich vor dem Kraftfahrzeug Objekte erkannt werden sollen. Leuchtdioden benötigen mit einer großen Emitterfläche entsprechend große und aufwendige Optiken, um das Sichtfeld (FOV) auszuleuchten und erreichen im Fernfeld nur mäßige Lichtleistung. Mit Leuchtdioden ist im Vergleich zu Sendepulsen mittels Laser eine geringe Lichtleistung erreichbar. Laserstrahlen sind mit einer vergleichsweise einfachen und kleinen Optik auf das Fernfeld fokussierbar. Allerdings weisen Lasersender eine geringere Repetierrate als Leuchtdioden auf. Zudem sind Laserdioden vergleichsweise teuer. Zudem nimmt die Lichtleistung von Laserdioden bei hohen Temperaturen stark ab.

Der vorliegenden Erfindung liegt die Aufgabe zugrunde, die Qualität der Detektionsergebnisse einer optoelektronischen Detektionseinrichtung für Kraftfahrzeuge in einem weiten Umgebungsbereich des Kraftfahrzeugs zu verbessern.

Diese Aufgabe wird erfindungsgemäß durch eine optoelektronische Detektionseinrichtung mit den Merkmalen des Anspruchs 1 gelöst. Die Aufgabe wird außerdem durch ein Verfahren zum Betrieb einer optoelektronischen Detektionseinrichtung mit den Merkmalen des Anspruchs 4 sowie gemäß Anspruch 8 durch ein Kraftfahrzeug mit einer solchen Detektionseinrichtung gelöst.

Die erfindungsgemäße optoelektronische Detektionseinrichtung weist mehrere optische Sender auf, nämlich einen Laser-Sender, welcher zur Abgabe von Laserstrahlen innerhalb eines Abtastwinkelbereichs ausgebildet ist, und einen LED-Sender, welcher wenigstens eine Leuchtdiode umfasst. Dabei werden im Betrieb der Detektionseinrichtung im Nahbereich der Umgebung der Detektionseinrichtung reflektierte Strahlen ausgewertet, welche vom LED-Sender mittels Leuchtdioden erzeugt wurden. Zur Erkennung von Objekten und Gewinnung von Informationen über die Objekte in einem jenseits des Nahbereichs liegenden Fernfeld der Umgebung der Detektionseinrichtung werden reflektierte Strahlen ausgewertet, welche vom Laser-Sender mittels Laser erzeugt wurden und in den Abtastwinkelbereich gesendet wurden.

Die Erfindung hat erkannt, dass in Fahrzeugnähe weitwinklige Messungen vorteilhaft sind, während in großer Entfernung engwinklig gemessen werden sollte. Die Kombination beider Messweisen ist mit der Erfindung vorgesehen. Die Erfindung verbindet die Vorteile der Laufzeitmessung (TOF) mittels Leuchtdioden mit den Vorteilen der Laufzeitmessung (TOF) mittels Laser-Dioden und vermeidet die jeweiligen Nachteile. Daher kann das gesamte Sichtfeld (FOV) kostengünstiger ausgeleuchtet werden, wobei sowohl im Nahbereich als auch im Fernfeld des gesamten Sichtfelds die Detektionsergebnisse mit hoher Qualität ermittelt werden können. Bei der Signalauswertung werden die Detektionsergebnisse, welche aus Reflektionen von LED-Sendepulsen ermittelt wurden mit solchen Detektionsergebnissen, welche aus Reflektionen von Laser-Sendepulsen ermittelt wurden, miteinander verrechnet und so eine Detektion des gesamten Sichtfelds (FOV) realisiert.

In einer vorteilhaften Ausführungsform der Erfindung sind der Laser-Sender und der LED-Sender alternativ einschaltbar, wodurch unter Heranziehung der Zeitmessung beziehungsweise der Vorgaben des aktuellen Abtastwinkels die empfangenen reflektierten Strahlen eindeutig der jeweiligen Quelle zugeordnet werden. Der LED-Sender sendet dabei innerhalb von Sendepausenintervallen des Laser-Senders, also während solchen Intervallen zwischen den Laser-Pulsen.

In einer vorteilhaften Ausführungsform sendet der LED-Sender in den Sendepausenintervallen des Laser-Senders mehrere LED-Sendepulse, wodurch die Qualität der Detektionsergebnisse im Nahbereich weiter verbessert ist.

In einer bevorzugten Ausführungsform der Erfindung wirken der Laser-Sender und der LED-Sender mit dem gleichen Empfänger zusammen, wodurch der bauliche Aufwand und damit die Kosten der optoelektronischen Detektionseinrichtung reduziert sind. Sämtliche reflektierte Strahlen, das heißt sowohl die reflektierten Strahlen der Sendepulse des LED-Senders als auch die reflektierten Strahlen der Sendepulse des Laser-Senders werden vom gleichen Empfänger aufgenommen, wobei die jeweiligen Empfangssignale beziehungsweise die mit dem Empfangssignal transportierten Informationen von einer Auswertungseinrichtung miteinander verrechnet werden.

Ausführungsbeispiel der Erfindung sind nachstehend anhand der Zeichnung näher erläutert. Es zeigen:
- Fig. 1:: eine schematische Ansicht eines Ausführungsbeispiels einer optoelektronischen Detektionseinrichtung,
- Fig. 2:: eine grafische Darstellung eines ersten Ausführungsbeispiels für Sendepulse der optischen Sender einer optoelektronischen Detektionseinrichtung,
- Fig. 3:: eine grafische Darstellung eines zweiten Ausführungsbeispiels von Sendepulsen von optischen Sendern einer Detektionseinrichtung,
- Fig. 4:: eine perspektivische Ansicht eines Sichtfelds vor einem Kraftfahrzeug.

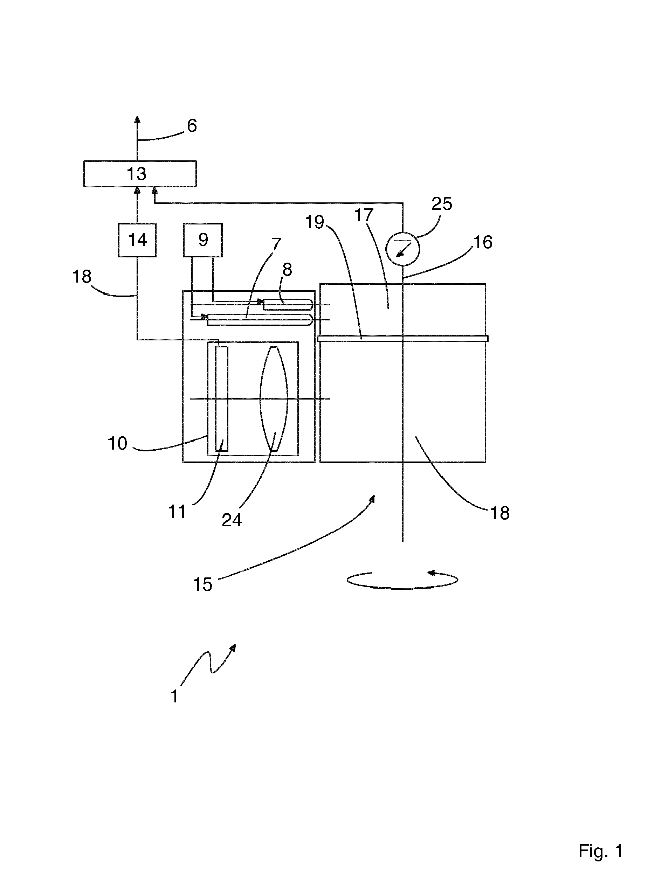

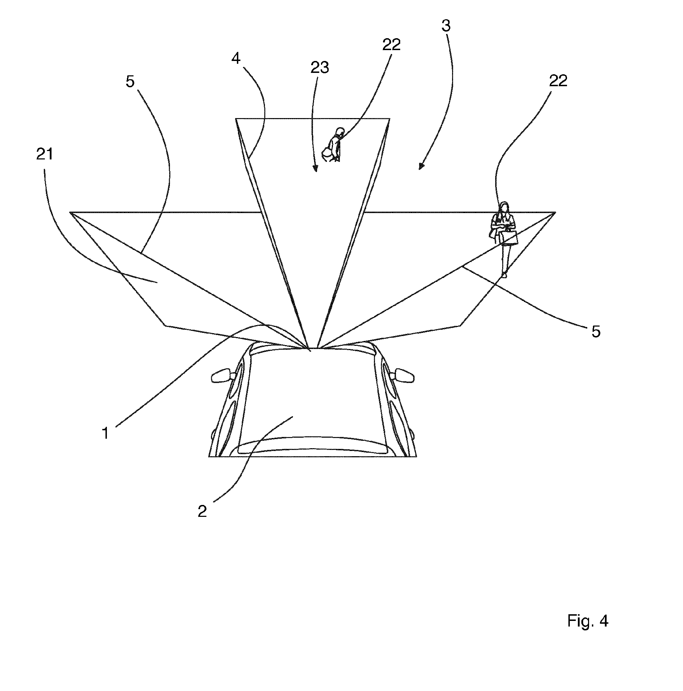

Fig. 1 zeigt eine schematische Seitenansicht einer abtastenden optoelektronischen Detektionseinrichtung 1. Die Detektionseinrichtung 1 wird zur Objekterkennung und Überwachung eines Umfelds eines Kraftfahrzeugs 2 (Fig. 4) verwendet. Die Detektionseinrichtung 1 ist in dem Ausführungsbeispiel gemäß Fig. 4 hinter der Windschutzscheibe des Kraftfahrzeugs angeordnet und leuchtet ein Sichtfeld 3 vor dem Kraftfahrzeug 2 aus. In weiteren Ausführungsbeispielen ist die Detektionseinrichtung 1 an einer anderen Stelle im Frontbereich des Kraftfahrzeugs 2 angebracht, beispielsweise am Kühlergrill.

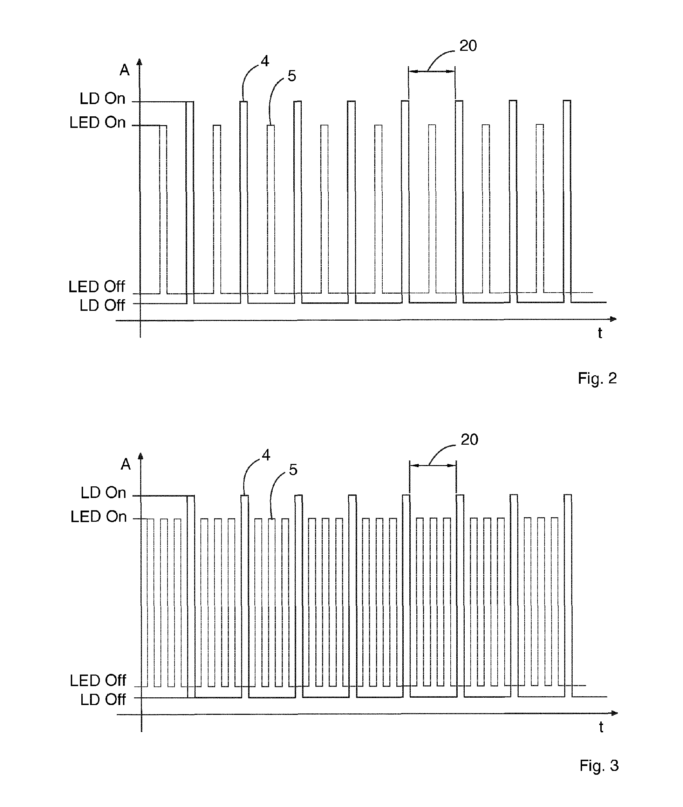

Die Detektionseinrichtung 1 gemäß Fig. 1 arbeitet nach dem Prinzip der Lichtlaufzeitmessung. Sie sendet Sendepulse 4, 5 (Fig. 2, Fig. 3) aus und ermittelt aus reflektierten und empfangenen Strahlen Detektionsergebnisse 6, welche einem nicht gezeigten Fahrerassistenzsystem zur Verfügung gestellt werden. Die Detektionseinrichtung 1 umfasst zwei optische Sender 7, 8, wobei einer der optischen Sender als Laser-Sender 7 ausgebildet ist und eine Laserdiode aufweist. Der Lasersender 7 wird von einer Steuereinrichtung 9 angesteuert und sendet Laser-Sendepulse 4 mit einer von der Steuereinheit 9 bestimmten Pulsfrequenz in die Umgebung aus.

Die Detektionseinrichtung 1 umfasst einen optischen Empfänger 10, welcher einen optoelektronischen Detektor 11 aufweist, der in Abhängigkeit empfangener Strahlen ein elektrisches Empfangssignal 12 bereitstellt. Im gezeigten Ausführungsbeispiel ist dem Detektor 11 eine Empfangslinse 24 optisch vorgeschaltet. Werden Sendepulse an einem Objekt im Sichtfeld des Kraftfahrzeugs reflektiert und fallen nach dem Eintritt in das Gehäuse der Detektionseinrichtung 1 auf den Detektor 11 des Empfängers 10, so wird ein entsprechendes elektrisches Empfangssignal 12 bereitgestellt und einer Auswertungseinrichtung 13 zugeführt. Das Empfangssignal 12 wird im gezeigten Ausführungsbeispiel vor der Einspeisung in die Auswertungseinrichtung 13 verstärkt, beispielsweise durch einen Transimpedanzverstärker 14.

Mittels des Laser-Senders 7 wird das Umfeld des Kraftfahrzeugs schrittweise gescannt. Hierzu umfasst die Detektionseinrichtung 1 einen Spiegelträger 15, welcher um eine Rotationsachse 16 drehbar angeordnet ist. Der Spiegelträger 15 wird von einer nicht dargestellten Antriebseinheit angetrieben. Der Spiegelträger 15 weist einen Sendespiegel 17 auf, welcher die Sendepulse des Lasersenders 7 auf die zu vermessende Szene umlenkt. Ein Empfangsspiegel 18 des Spiegelträgers 15 lenkt die reflektierten Strahlen zum Empfänger 10. Der Sendespiegel 17 und der Empfangsspiegel 18 liegen im gezeigten Ausführungsbeispiel durch eine Trennwand 19 getrennt. Dem Spiegelträger 15 oder dessen Antriebseinrichtung, die ein Schrittmotor sein kann, ist ein Drehwinkelgeber 25 zugeordnet, welcher die jeweilige Drehwinkelstellung der Auswertungseinrichtung 13 vorgibt.

Die Detektionseinrichtung 1 weist zusätzlich zu dem Laser-Sender 7 einen LED-Sender 8 als weiteren optischen Sender auf. Der LED-Sender 8 umfasst als Lichtquelle eine oder mehrere Leuchtdioden. Der LED-Sender 8 wird ebenfalls von der Steuereinheit 9 hinsichtlich der Pulsfrequenz der abgegebenen Sendepulse 5 gesteuert. Der LED-Sender 8 sendet seine Sendepulse 4 im gezeigten Ausführungsbeispiel über den Sendespiegel 17 in das zu vermessende Umfeld der Detektionseinrichtung 1. In weiteren Ausführungsbeispielen ist eine direkte Emission der Sendepulse der Leuchtdiode in das Umfeld vorgesehen.

Der Laser-Sender 7 und der LED-Sender 8 sind alternativ einschaltbar und wirken mit dem gleichen optischen Empfänger 10 zusammen. In anderen Worten ausgedrückt nimmt der optische Empfänger 10 reflektierte Strahlen auf, welche entweder Reflektionen von Laser-Sendepulsen 4 oder Reflektionen von LED-Sendepulsen 5 sind. Bei der Ermittlung der Detektionsergebnisse 6 verrechnet die Auswertungseinheit 13 die mittels Laser-Senders 7 mit den mittels LED-Senders 8 erfassten Informationen.

Fig. 2 zeigt ein Pulsschema für den Betrieb des Laser-Senders 7 und des LED-Senders 8 der Detektionseinrichtung gemäß Fig. 1. Dabei ist in dem Graf für den Aktivierungszustand des Lasersenders der aktivierte Zustand LD-ON und der ausgeschaltete Zustand LD-OFF dargestellt. Entsprechend sind für den strichlierten grafischen Verlauf des Schaltzustands des LED-Senders der eingeschaltete Zustand LED-ON und der ausgestaltete Zustand LED-OFF dargestellt. Die grafischen Verläufe zeigen dabei die Pulsfrequenz der Sendepulse 4 des Lasersenders 7 und der Sendepulse 5 des LED-Senders 8. Die LED-Sendepulse 5 werden dabei in den Sendepausenintervallen 20 des Laser-Senders abgegeben, das heißt in jedem Zeitintervall zwischen aufeinander folgenden Sendpulsen 4 des Laser-Senders 7. Im Ausführungsbeispiel gemäß Fig. 2 wird in den Sendepausenintervallen 20 jeweils ein Sendepuls 5 der Leuchtdiode des LED-Senders 8 abgegeben.

Fig. 3 zeigt ein Ausführungsbeispiel, bei dem in den Sendepausenintervallen 20 des Laser-Senders 7 mehrere Sendepulse 5 des LED-Senders 8 abgegeben werden. Im gezeigten Ausführungsbeispiel gibt der LED-Sender 7 während jedes Sendepausenintervalls 20 drei Sendepulse 5 ab. In weiteren Ausführungsbeispielen sendet die Leuchtdiode auch öfter als dreimal in den Sendepausenintervallen 20 zwischen den Laser-Sendepulsen 4.

Fig. 4 zeigt das Sichtfeld 3 der Detektionseinrichtung 1 vor einem Kraftfahrzeug 2. In einem Nahbereich 21 des Sichtfelds 3 werden reflektierte Strahlen ausgewertet, welche vom LED-Sender 8 mittels Leuchtdioden erzeugt wurden. Mit den Vorteilen der weitwinkligen Laufzeitmessung mittels LED-Senders im Nahbereich 21 können hochwertige Messergebnisse und Informationen über Objekte beziehungsweise Personen 22 im Sichtfeld 3 ermittelt werden.

In einem jenseits des Nahbereichs 21 liegenden Fernfeld 23 der Umgebung der Detektionseinrichtung 1 werden reflektierte Strahlen ausgewertet, welche vom Laser-Sender 7 mittels Lasers erzeugt wurden. Mit dem Laser-Sender 7 wird das Fernfeld 23 in einem zentral vor dem Kraftfahrzeug 1 liegenden Abtastwinkelbereich gescannt.

Der mittels Laser-Senders 7 gescannte Zentralbereich des Sichtfelds 3 wird mit Information aus den seitlichen Nahbereichen 21, welche durch weitwinkelige Messung mittels LED-Senders 8 ermittelt werden, ergänzt und präzisiert.

Bei der Bestimmung des Empfangssignals 12 und Berechnung von Detektionsergebnissen 6 mit Informationen über Objekte beziehungsweise Personen 22 im Sichtfeld 3 kombiniert die Auswertungseinrichtung 13 Messinformationen, welche auf der Grundlage des Laser-Senders gewonnen werden und mit Messinformationen, welche auf der Grundlage des LED-Senders gewonnen wurden miteinander und verrechnet diese.

## Patentansprüche

1. Optoelektronische Detektionseinrichtung mit mindestens einem optischen Sender (7,8) zum Aussenden elektromagnetischer Sendepulse (4, 5) in eine Umgebung der Detektionseinrichtung (1), mit einem optischen Empfänger (10) zum Empfangen von reflektierten Strahlen, welcher einer Auswertungseinrichtung (13) ein in Abhängigkeit der reflektierten Strahlen gebildetes Empfangssignal (12) bereit stellt,
**dadurch gekennzeichnet, dass**
die Detektionseinrichtung (1) mehrere optische Sender (7, 8) aufweist, nämlich einen Laser-Sender (7), welcher zur Abgabe von Laserstrahlen innerhalb eines Abtastwinkelbereichs ausgebildet ist und einen LED-Sender (8), welcher wenigstens eine Leuchtdiode umfasst.

2. Detektionseinrichtung nach Anspruch 1,
**dadurch gekennzeichnet, dass**
der Lasersender (7) und der LED-Sender (8) alternativ einschaltbar sind.

3. Detektionseinrichtung nach Anspruch 1 oder 2,
**dadurch gekennzeichnet, dass**
der Lasersender (7) und der LED-Sender (8) mit dem gleichen optischen Empfänger (10) zusammenwirken.

4. Verfahren zum Betrieb einer Detektionseinrichtung nach einem der vorhergehenden Ansprüche,
**dadurch gekennzeichnet, dass**
in einem Nahbereich (21) der Umgebung der Detektionseinrichtung (1) reflektierte Strahlen ausgewertete werden, welche vom LED-Sender (8) mittels Leuchtdioden erzeugt wurden, und in einem jenseits des Nahbereichs (21) liegenden Fernfeld (23) der Umgebung der Detektionseinrichtung reflektierte Strahlen ausgewertet werden, welche vom Laser-Sender (7) mittels Laserstrahlen erzeugt wurden.

5. Verfahren nach Anspruch 4,
**dadurch gekennzeichnet, dass**
der LED-Sender (8) innerhalb von Sendepausenfenstern (20) zwischen den Sendepulsen (4) des Lasersenders (7) Sendepulse (5) sendet.

6. Verfahren nach Anspruch 5,
**dadurch gekennzeichnet, dass**
der LED-Sender (8) in den Sendepausenfenstern (20) des Laser-Senders mehrere Sendepulse (5) sendet.

7. Verfahren nach einem der Ansprüche 4 bis 6,
**dadurch gekennzeichnet, dass**
die Auswertungseinrichtung (13) bei der Bestimmung des Empfangssignals (12) Messinformationen, welche auf der Grundlage des Laser-Senders (7) ermittelt wurden, und Messinformationen, welche auf der Grundlage des LED-Senders (8) ermittelt wurden, kombiniert und miteinander verrechnet.

8. Kraftfahrzeug mit einer optoelektronischen Detektionseinrichtung gemäß einem der Ansprüche 1 bis 3.
